(19) **Europäisches Patentamt / European Patent Office / Office européen des brevets**

(11) **EP 3 163 216 A1**

(12) # EUROPEAN PATENT APPLICATION

(43) Date of publication:
**03.05.2017 Bulletin 2017/18**

(21) Application number: **15306732.7**

(22) Date of filing: **30.10.2015**

(51) Int Cl.:
*F24J 2/54* (2006.01)　　*H02S 20/32* (2014.01)
*F24J 2/38* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
 • **KELLY, Gerard**
  **Galway (IE)**

 • **MAC GIOLLA EAIN, Marc**
  **Carlow (IE)**

(74) Representative: **Bryers LLP**
 **7 Gay Street**
 **Bath, Bath and North East Somerset BA1 2PH (GB)**

Remarks:
 •Claim 16 (indicated as claim 15 ) is deemed to be abandoned due to non-payment of the claims fee (Rule 45(3) EPC).
 •Amended claims in accordance with Rule 137(2) EPC.

(54) **AN APPARATUS AND A METHOD FOR CONTROLLING ANGULAR POSITION OF A PLANAR ARRAY OF ONE OR MORE PHOTO-VOLTAIC CELLS AND A SYSTEM FOR MODIFYING THE POSITION OF A PLANAR ARRAY OF ONE OR MORE PHOTO-VOLTAIC CELLS**

(57) An apparatus, comprising a planar array of one or more photo-voltaic cells, and an elongated stalk having the planar array fixed at one end thereof, the elongated stalk including a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk.

FIG. 2

EP 3 163 216 A1

## Description

TECHNICAL FIELD

Aspects relate, in general, an apparatus, a method for controlling angular position of a planar array of one or more photo-voltaic cells and a system for modifying the position of a planar array of one or more photo-voltaic cells.

BACKGROUND

It is desirable to be able to maximise the efficiency of photo-voltaic (PV) cells by ensuring that they are optimally exposed to solar radiation. This typically means that, during daylight hours, the surface of the cell should be directed towards the source of the radiation. In order to compensate for movements of the source over the course of a day, tracking systems can be used.

Active solar trackers typically employ motors and/or rams that are expensive and require costly control systems to enable them to track the sun. Passive solar trackers are designed to bypass these constraints and offer a simple, cost effective means of tracking the sun.

Typical passive solar trackers consist of a PV cell mounted on a pivot. Both ends of the PV cell contain small reservoirs filled with a low boiling point liquid or gas. Mounted above these reservoirs are solar concentrators. When the sun shines on one of these concentrators, the liquid or gas within is heated causing an increase in pressure. The resulting pressure change causes an imbalance of the PV cell, causing it to tilt and move.

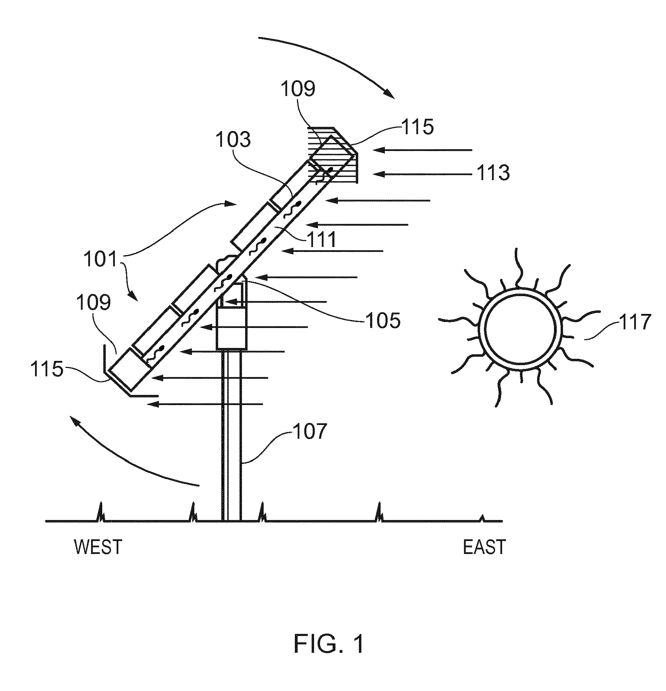

Figure 1 is a schematic representation of a set of PV cells 101 mounted on a base structure 103 attached to a pivot 105 on a support 107. Reservoirs 109 are depicted, and liquid or gas 111 can flow between them in the presence of solar radiation I 13 as shown. Shades I 15 are provided over the reservoirs 109 to shield respective ones of the reservoirs from the radiation source 117 as shown. As can be seen, these types of solar trackers are designed only to track the sun along one axis, East - West, and they generally perform poorly as they are unstable due to the continual heating and cooling of the enclosed liquid. Additionally, they are unstable in strong winds, with the wind affecting the balance of the liquid within the enclosed ducts.

SUMMARY

According to an example, there is provided an apparatus, comprising a planar array of one or more photo-voltaic cells, and an elongated stalk having the planar array fixed at one end thereof, the elongated stalk including a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk. The elongated stalk can include a plurality of bimetallic strips arranged around the axis of the elongated stalk, each of the bimetallic strips being able to bend in response to a temperature change. The stalk or an outer surface of the elongated stalk can comprise a polymer including a photosensitive or phototropic material selected from cinnamic acid, cinnamylidene or azobenzene. The elongated stalk can comprise a helical structure formed of the mechanically photo responsive polymer. The plurality of bimetallic strips can extend along directions approximately parallel to the axis of the elongated stalk. The elongated stalk can have a curved outer surface and/or profile. The plurality of bimetallic strips can be more resistant to bending in directions perpendicular to the axis of the elongated stalk than the part of the elongated stalk formed of the mechanically photo responsive polymer. An assembly of one or more Fresnel lenses can be arranged around at least a portion of the elongated stalk to concentrate solar radiation onto the one or more bimetallic strips. The one or more Fresnel lenses can be so arranged as to concentrate solar radiation onto an exposed portion of the stalk or an outer surface thereof. The planar array of one or more photo-voltaic cells can be configured to shade a portion of the elongated stalk from solar radiation, whereby to circumvent critical deflection of the apparatus. The elongated stalk can be operable to modify the attitude of the planar array of one or more photo-voltaic cells upon exposure to solar radiation and heat.

According to an example, there is provided a method for controlling angular position of a planar array of one or more photo-voltaic cells relative to a radiation source, the method comprising exposing an elongated stalk having the planar array fixed at one end thereof and including a mechanically photo responsive polymer to the radiation source whereby to passively cause the elongated stalk to bend in a direction perpendicular to an axis of the elongated stalk in response to one side of the elongated stalk being illuminated by the radiation source with a greater intensity than an opposite side of the elongated stalk. The method can further comprise providing an assembly of one or more Fresnel lenses arranged around at least a portion of the elongated stalk to concentrate solar radiation onto one or more bimetallic strips arranged around the axis of the elongated stalk.

According to an example, there is provided a system for modifying the position of a planar array of one or more photo-voltaic cells, the system comprising an elongated stalk being configured to receive the planar array fixed at one end thereof, the elongated stalk including a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk. The elongated stalk can further include a plurality of bimetallic strips arranged around the axis of the elongated stalk, each of the bimetallic strips being able to bend in response to a temperature change. The stalk or an outer surface of the elongated stalk can comprise a polymer including a photosensitive or phototropic material selected from cinnamic acid, cinnamylidene or azobenzene.

BRIEF DESCRIPTION OF THE DRAWINGS

Embodiments will now be described, by way of example only, with reference to the accompanying drawings, in which:

Figure 1 is a schematic representation of a passive solar tracker;

Figures 2a and 2b are schematic representations of an apparatus according to an example;

Figure 3 is a schematic representation of an apparatus according to an example; and

Figure 4 is a schematic representation of an apparatus according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

There is a considerable demand for ubiquitous high-speed internet and perfect 4G coverage. However, outside of major city centres and urban hubs, this does not currently exist. One way of improving coverage in rural areas is the deployment of small cell devices. Currently, however, this is not practical due to both technological and financial constraints, and it is desirable to be able to utilise completely autonomous renewably powered small cell devices. For example, in a typical grid-connected application power hungry telecoms hardware is not a problem. However, at present, a large solar panel and battery would be required to power an autonomous small cell device, even when using the best available solar and energy storage technology.

Autonomous renewably powered small cell devices can incorporate high efficiency solar (photo-voltaic) cells, high energy density storage and smart control, thereby making them completely autonomous, allowing deployment in remote rural locations, thereby significantly improving network coverage. According to an example, an apparatus is provided that can be used to provide power for an autonomous small cell device, and more generally any other device that needs to be powered, and may be provided in a rural area for example.

The apparatus can be used with rural small cell deployments to enable them to function autonomously. More generally, passive solar trackers can also be used for many other devices where benefit may be obtained from deploying such devices in remote or rural locations where no stable (grid) power supply is available.

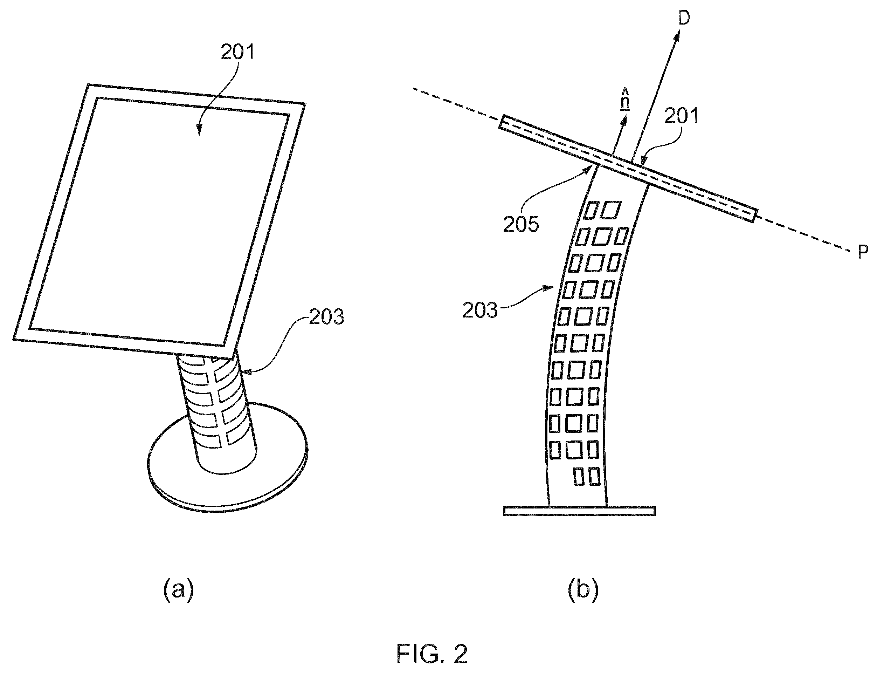

Figures 2a and 2b are schematic representations of an apparatus according to an example. Figure 2a shows a front perspective view of the apparatus, and figure 2b shows a side view of the apparatus. A PV cell device, or device configured as a planar array of one or more PV cells 201 is arranged on an elongated stalk 203 that is configured to receive the PV planar array 201 at one end thereof. For example, the planar array 201 may comprise a base structure configured to receive PV cells, the base structure being attached, adhered or integral with the elongated stalk 203. The planar array 201 is mounted perpendicularly to the long axis of the stalk 203. Put another way, at the end 205 of the stalk 203, the normal $\hat{n}$ to the plane P with which the planar array 201 is parallel, or within which the device resides, is parallel to the direction D of the long axis of the stalk 203 at the end 205. The stalk 203 provides a system for modifying the position of a planar array of one or more photo-voltaic cells according to an example. The stalk 203 and the planar array 201 form an apparatus according to an example.

In an example, as the stalk 203 moves (as will be explained in more detail below) the planar array 201 also moves such that $\hat{n}$ remains parallel to D. According to an example, the elongated stalk 203 or an outer portion or surface thereof comprises a mechanically photo responsive material.

The mechanically photo responsive material can be a polymer such as a smart polymer, which can be a functionalized polymer comprising a photosensitive material such as cinnamic acid, cinnamylidene or azobenzene for example. The material can change its configuration, dimensions or physical properties upon exposure to radiation such as light, for example upon exposure to ultraviolet light (200-250 nm).

In an example, the elongated stalk 203 is spring like in shape to enable the mechanically photo responsive material to track the sun in all directions, North - South and East - West. In an example, the stalk has an arcuate shape. In this manner, only part of it will catch the light from the source, with part being in the shade of the planar array 201. This can help to ensure that the stalk 203 does not undergo a critical deflection.

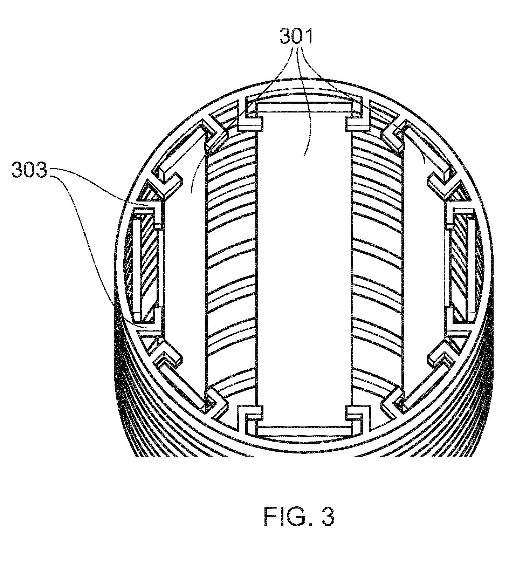

According to an example, one or more bimetallic strips are arranged within the stalk 203. Figure 3 is a schematic representation of perspective view of an apparatus according to an example. The strips 301 reside in slots, clips or brackets 303 within the stalk 203. The strips respond to changes in temperature and act as dampers to control the rate of deflection of the photo responsive polymer outer stalk 203 and prevent unwanted movement of the planar array 201 in windy conditions for example. In an example, the strips are arranged so that they extend lengthways in an axial direction within the structure, as shown in figures 2a, 2b and 3 for example. In an example, the strips are arranged around the axis of the elongate stalk, and each of them is able to bend in response to a temperature change.

For a given strip 301, corresponding slots, brackets or clips 303 can be provided at the top and bottom of the stalk, or at multiple different locations along the length of the stalk. For example, multiple neighboring slots can be provided that are aligned one on top of the other over the length of the structure, whereby to enable a strip to be fed through the slots all the way down the length of the stalk. Alternatively, slots may be provided within the stalk at predefined intervals.

The strips 301 comprise first and second metallic layers with respective different coefficients of thermal expansion. Therefore, and as is typically known, upon exposure to heat the strips bend in a given direction. Accordingly, on a side of the stalk 203 exposed to the sun, the strips will heat and thus deflect. In an example, the direction of deflection can be selected or modified so that the strips direct towards or away from the heat source. Strips 301 may be removed from slots 303 to be replaced or to modify the direction of deflection (e.g. towards or away from the heat source).

Accordingly, the elongated stalk 203 comprises a mechanically photo responsive polymer, which is a form of smart material created by functionalising a polymer with photo responsive molecules, such as cinnamic acid, cinnamylidene or azobenzene as noted above. Exposure to light of a suitable wavelength, such as UV, typically induces a physical movement of the order of 12 - 18% deflection.

In an example, the stalk 203 is similar to a spring or helix in geometry, thus allowing it to twist and turn in any direction. In an example, the stalk includes exposed portions or windows within the photo responsive polymer through which the one or more bimetallic strips are visible or exposed. For example, if the stalk is in the form a spring or helix, it will include a helical or spring like opening defined by the gap between the helical polymer over the length of the stalk.

Similarly to a plant for example, and as depicted in figures 2a and 2b, the stalk 203 has a curved outline, thus allowing the planar array 201 to more easily track the light source. The use of a functionalised polymer material in this geometry overcomes a number of issues encountered in existing passive solar trackers. For example, when mounted at elevation, passive trackers are exposed to light and strong winds. These winds cool any surface or liquid that, under no wind conditions, induces a movement of the passive solar tracker and hence renders the solar tracker useless.

As noted above, contained within the elongated stalk 203 can be a series of bimetallic strips 301, as depicted in figure 3. The strips consist of two different metals that are joined together throughout their length and are configured to convert a temperature change into a mechanical deflection. The two different metals expand at different rates when heated, with the strip bending one way when heated and the opposite when cooled. In an example, the bimetallic strips 301 are independent of one another. The strips are not held firmly in place in the slots 303 so that the structure can freely move as the strips deflect.

According to an example, when heated by the sun, the bimetallic strips 301 bend in the direction of the heat. Depending on the position of the sun, the intensity of the sunlight and hence heating effect, the deflection of the bimetallic strips will vary. As the bimetallic strips are independent of one another this will allow a more effective and smooth tracking of the sun. The bimetallic strips can be designed to deflect according to the temperature range they are likely to encounter. For example, known materials can be selected for combination to form a bimetallic strip that is configured to deflect in the presence of heat. For example, steel and copper, iron and aluminium or steel and brass can be used.

For example, for brass and steel, the coefficients of linear expansion are:

Brass: $19 \times 10^{-6}$ /°C Steel: $11 \times 10^{-6}$ /°C

When a bimetallic strip made from these metals is heated, the brass expands more than the steel and the strip curves with the brass on the outside.

According to an example, the following equation can be used to design the bimetallic strips to induce the required amount of deflection to move toward the sun. The thermal deflection is calculated as follows:

$$B = \frac{0.53F(T_2 - T_1)L^2}{t} \qquad (1)$$

Where $B$, $F$, $(T_2 - T_1)$, $L$ and $t$ refer to the linear deflection, flexibility, temperature change, length and material thickness respectively. Nickel-titanium bimetallic strips, also known as nitinol, undergo significant deflection, approximately 20%, over small temperature changes of 4° - 6°C, and are therefore suited to use in a passive tracking system as provided herein.

Additionally, as noted above, the strips 301 act as dampers, controlling the rate and range of deflection of the planar array 201 due to the response of the photo responsive polymer of the stalk 203.

It is usual to see PV cells mounted on roofs in urban locations. At night these locations are lit by street and spot lighting. The mechanically photo responsive polymer of the stalk 203 would respond to these multiple light sources and thus try to deflect in multiple directions. The bimetallic strips would stop this deflection due to the cool temperatures restricting their potential deflection. This design would be ideal in locations near the equator that receiver a high number, over 250, of clear sunny days a year.

In locations further from the equator there are more distinct weather seasons. Consequently, there are fewer clear sunny days, shorter daylight hours, stronger winds and significant potential for snow. According to an example, such varied seasonal conditions can be accounted for using a series of, for example, Fresnel lenses.

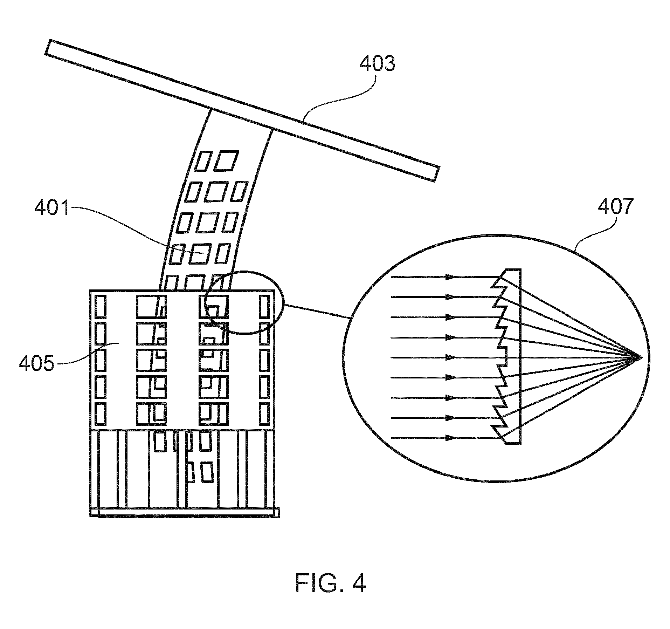

Figure 4 is a schematic representation of an apparatus according to an example. As in the example of figures 2(a/b) and 3, an elongated stalk 401 including a functionalised polymer material is provided. The stalk may include bimetallic strips arranged therein, and the stalk supports a planar array of one or more PV cells 403.

In areas where there is a lower solar intensity, a bank of linear type Fresnel lenses 405 can be used to concentrate the solar light onto the bimetallic strips that are exposed within gaps in the stalk 401, resulting in heating and deflection of the bimetallic strips. Fresnel lenses are commonly found in concentrated solar power plants and are a highly effective means of concentrating light. As depicted in the exploded portion 407 of figure 4, the lens consists of a series of concentric annular rings with stepwise discontinuities between the rings. The system of figure 4 is the same as that shown in figures 2(a/b) and 3, however, the outer structure can be made of a metal to better withstand the harsher environmental conditions.

Therefore, according to an example, there is provided an apparatus, in the form of a passive tracker, that responds to both light and heat, thus allowing a more precise and controlled means of tracking the sun. Bimetallic strips within the structure can act as a support for a planar array of PV cells and also as dampers, controlling the motion of the planar array in both sunny and windy climates and thus eliminating the need for damping systems, such as those that are necessary in other passive solar trackers. Accordingly, the angular position of a platform relative to a radiation source can be controlled by exposing the elongated stalk as described above to the radiation source. The exposure of the stalk to the combination of heat and light causes it to move, thereby exhibiting a kind of phototropism. This enables a mounted planar array of PV devices to track the sun and thus enables exposure to solar radiation to be maximized.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. An apparatus, comprising:

a planar array of one or more photo-voltaic cells; an elongated stalk having the planar array fixed at one end thereof, the elongated stalk including a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk.

2. The apparatus of claim 1, wherein the elongated stalk includes a plurality of bimetallic strips arranged around the axis of the elongated stalk, each of the bimetallic strips being able to bend in response to a temperature change.

3. The apparatus as claimed in claim 1 or 2, wherein an outer surface of the elongated stalk comprises a polymer including a photosensitive or phototropic material selected from cinnamic acid, cinnamylidene or azobenzene.

4. The apparatus as claimed in claim 1, 2, or 3, wherein the elongated stalk comprises a helical structure formed of the mechanically photo responsive polymer.

**5.** The apparatus as claimed in claim 2, wherein the plurality of bimetallic strips extend along directions approximately parallel to the axis of the elongated stalk.

**6.** The apparatus as claimed in any preceding claim, wherein the elongated stalk has a curved outer surface and/or profile.

**6.** The apparatus as claimed in claim 2 or 5, wherein the plurality of bimetallic strips is more resistant to bending in directions perpendicular to the axis of the elongated stalk than the part of the elongated stalk formed of the mechanically photo responsive polymer.

**7.** The apparatus as claimed in any preceding claim, further comprising:

an assembly of one or more Fresnel lenses arranged around at least a portion of the elongated stalk to concentrate solar radiation onto the one or more bimetallic strips.

**8.** The apparatus as claimed in claim 7, wherein the one or more Fresnel lenses are so arranged as to concentrate solar radiation onto an exposed portion of the stalk or outer surface thereof.

**9.** The apparatus as claimed in any preceding claim, wherein the planar array of one or more photo-voltaic cells is configured to shade a portion of the elongated stalk from solar radiation, whereby to circumvent critical deflection of the apparatus.

**10.** The apparatus as claimed in claim 9, wherein the elongated stalk is operable to modify the attitude of the planar array of one or more photo-voltaic cells upon exposure to solar radiation and heat.

**11.** A method for controlling angular position of a planar array of one or more photo-voltaic cells relative to a radiation source, the method comprising:

exposing an elongated stalk having the planar array fixed at one end thereof and including a mechanically photo responsive polymer to the radiation source whereby to passively cause the elongated stalk to bend in a direction perpendicular to an axis of the elongated stalk in response to one side of the elongated stalk being illuminated by the radiation source with a greater intensity than an opposite side of the elongated stalk.

**12.** A method as claimed in claim 11, the method further comprising:

providing an assembly of one or more Fresnel lenses arranged around at least a portion of the elongated stalk to concentrate solar radiation onto one or more bimetallic strips arranged around the axis of the elongated stalk.

**13.** A system for modifying the position of a planar array of one or more photo-voltaic cells, the system comprising:

an elongated stalk being configured to receive the planar array fixed at one end thereof, the elongated stalk including a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk.

**14.** The system as claimed in claim 13, wherein the elongated stalk further includes a plurality of bimetallic strips arranged around the axis of the elongated stalk, each of the bimetallic strips being able to bend in response to a temperature change.

**15.** The system as claimed in claim 13 or 14, wherein the stalk or an outer surface of the elongated stalk comprises a polymer including a photosensitive or phototropic material selected from cinnamic acid, cinnamylidene or azobenzene.

**Amended claims in accordance with Rule 137(2) EPC.**

**1.** An apparatus, comprising:

a planar array (201) of one or more photo-voltaic cells;
an elongated stalk (203) having the planar array (201) fixed at one end thereof, the elongated stalk comprising a helical structure formed from a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk, wherein the elongated stalk includes a plurality of bimetallic strips (301) arranged around the axis of the elongated stalk and extending parallel to the axis of the elongated stalk, each of the bimetallic strips being able to bend in response to a temperature change.

**2.** The apparatus as claimed in claim I, wherein an outer surface of the elongated stalk comprises a polymer including a photosensitive or phototropic material selected from cinnamic acid, cinnamylidene or azobenzene.

**3.** The apparatus as claimed in any preceding claim, wherein the elongated stalk has a curved outer surface and/or profile.

**4.** The apparatus as claimed in any preceding claim, wherein the plurality of bimetallic strips is more resistant to bending in directions perpendicular to the axis of the elongated stalk than the part of the elongated stalk formed of the mechanically photo responsive polymer.

**5.** The apparatus as claimed in any preceding claim, further comprising:

an assembly of one or more Fresnel lenses (405) arranged around at least a portion of the elongated stalk (203) to concentrate solar radiation onto the one or more bimetallic strips (301).

**6.** The apparatus as claimed in claim 5, wherein the one or more Fresnel lenses (405) are so arranged as to concentrate solar radiation onto an exposed portion of the stalk or outer surface thereof.

**7.** The apparatus as claimed in any preceding claim, wherein the planar array of one or more photo-voltaic cells (201) is configured to shade a portion of the elongated stalk (203) from solar radiation, whereby to circumvent critical deflection of the apparatus.

**8.** The apparatus as claimed in claim 7, wherein the elongated stalk (203) is operable to modify the attitude of the planar array of one or more photo-voltaic cells (201) upon exposure to solar radiation and heat.

**9.** A method for controlling angular position of a planar array of one or more photo-voltaic cells relative to a radiation source, the method comprising:

exposing an elongated stalk (203) having the planar array fixed at one end thereof and including a helical structure formed from a mechanically photo responsive polymer and a plurality of bimetallic strips (301) arranged around the axis of the elongated stalk and extending parallel to the axis of the elongated stalk, to the radiation source whereby to passively cause the elongated stalk to bend in a direction perpendicular to an axis of the elongated stalk in response to one side of the elongated stalk being illuminated by the radiation source with a greater intensity than an opposite side of the elongated stalk.

**10.** A method as claimed in claim 9, the method further comprising:

providing an assembly of one or more Fresnel lenses (403) arranged around at least a portion of the elongated stalk (203) to concentrate solar radiation onto one or more bimetallic strips (301) arranged around the axis of the elongated stalk (203).

**11.** A system for modifying the position of a planar array of one or more photo-voltaic cells (201), the system comprising:

an elongated stalk (203) being configured to receive the planar array fixed at one end thereof, the elongated stalk (203) comprising a helical structure formed from a mechanically photo responsive polymer arranged to passively cause the elongated stalk to bend in a direction perpendicular to an axis of the elongated stalk in response to one side of the elongated stalk being illuminated with a greater intensity of light than an opposite side of the elongated stalk, wherein the elongated stalk includes a plurality of bimetallic strips (301) arranged around the axis of the elongated stalk, each of the bimetallic strips being able to bend in response to a temperature change.

**12.** The system as claimed in claim II, wherein the polymer includes a photosensitive or phototropic material selected from cinnamic acid, cinnamylidene or azobenzene.

EP 3 163 216 A1

FIG. 1

(a)                                    (b)

FIG. 2

EP 3 163 216 A1

FIG. 3

FIG. 4

Europäisches
Patentamt

European
Patent Office

Office européen
des brevets

# EUROPEAN SEARCH REPORT

Application Number

EP 15 30 6732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 799 987 B1 (HINES STEPHEN P [US]) 21 September 2010 (2010-09-21) | 1-3 | INV. F24J2/54 H02S20/32 F24J2/38 |
| A | * column 4; figures * | 4-15 | |
| X | US 2014/238488 A1 (JIANG HONGRUI [US] ET AL) 28 August 2014 (2014-08-28) * paragraphs [0003] - [0007]; figures * | 1 | |
| X | JP S60 205151 A (TOSHIBA ELECTRIC EQUIP) 16 October 1985 (1985-10-16) * abstract; figures * | 1 | |
| A | JP S59 158938 A (SUMITOMO ELECTRIC INDUSTRIES) 8 September 1984 (1984-09-08) * figures * | 1 | |
| A | JP S59 229503 A (SUMITOMO ELECTRIC INDUSTRIES) 24 December 1984 (1984-12-24) * figures * | 1 | |

**TECHNICAL FIELDS SEARCHED (IPC)**

F24J
H02S

The present search report has been drawn up for all claims

| Place of search | Date of completion of the search | Examiner |
|---|---|---|
| Berlin | 19 April 2016 | Ferro Pozo, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 163 216 A1**

## ANNEX TO THE EUROPEAN SEARCH REPORT
## ON EUROPEAN PATENT APPLICATION NO.

EP 15 30 6732

19-04-2016

| Patent document cited in search report | | Publication date | Patent family member(s) | Publication date |
|---|---|---|---|---|
| US 7799987 | B1 | 21-09-2010 | NONE | |
| US 2014238488 | A1 | 28-08-2014 | NONE | |
| JP S60205151 | A | 16-10-1985 | NONE | |
| JP S59158938 | A | 08-09-1984 | NONE | |
| JP S59229503 | A | 24-12-1984 | NONE | |

EPO FORM P0459

For more details about this annex : see Official Journal of the European Patent Office, No. 12/82